# EUROPEAN PATENT APPLICATION

(11) **EP 2 194 470 A1**
(43) Date of publication of application: **09.06.2010**
(21) Application number: 09173882.3
(22) Date of filing: 23.10.2009
(51) Int. Cl.: G06F 17/30, G01C 21/36

(54) **Search device, search method, and computer-readable medium that stores search program**

(30) Priority: 02.12.2008 JP 2008307027
(71) Applicant: AISIN AW CO., LTD., Anjo-shi, Aichi-ken 444-1192 (JP)
(72) Inventor: Kawauchi, Hiroshi, Anjo-shi, Aichi-ken 444-1192 (JP)
(74) Representative: Intes, Didier Gérard André

(57) **Abstract**

The present invention provides a technology that performs effective input support and relates to a search device that includes:
an input portion (41) that accepts an input of a first character string for searching for a search object,
a storage portion (56, 58) that stores second character strings for searching for the search object,
a search portion (1) that searches among the second character strings for at least one second character string that begins with a character string that matches the first character string that is input,
a first display portion (42) that displays a second character string of the at least one of the second character strings, unless the number of characters in the second string in not more than the number of operations needed to select the said second character string, and
a second display portion (42) that, when one of the at least one second character string that is displayed is selected, displays a search object that corresponds to the selected second character string.

The invention also provides a corresponding search method and a corresponding computer-readable storage medium.

## Description

### INCORPORATION BY REFERENCE

The disclosure of Japanese Patent Application No. 2008-307027 filed on December 2, 2008, including the specification, drawings and abstract is incorporated herein by reference in its entirety.

### BACKGROUND OF THE INVENTION

### 1. Field of the Invention

The present invention relates to a search device, a search method, and a computer-readable storage medium in which a search program is stored, such as a search device, a search method, and a computer-readable storage medium in which a search program is stored that provide support for input by a user.

### 2. Description of the Related Art

Search functions that search for a desired object in accordance with an input character, such as an input to an electronic dictionary, a mobile telephone, or the like, for example, are widely used.
Search functions are also used to search for a destination in accordance with an input character in navigation devices that guide a vehicle to a destination. For example, a navigation device such as "Navigation Device for Vehicle and Storage Medium" in Japanese Patent Application Publication No. JP-A-11-271084 sets the destination by accepting an input of a search character string from a user and searching for a destination name (a facility name) that corresponds to the search character string.

### SUMMARY OF THE INVENTION

The applicants of the present application have developed a technology that, in order to provide support for the input of the search character string by the user, stores as a keyword a word that is contained in a plurality of destination names, searches for the keyword in accordance with an input character, and displays the found keyword as an input character candidate on a character input screen.
For example, in a case where "ABCDFHI" is stored as a keyword and "ABCD" is input from character buttons for character input, "ABCDFHI" is selectably displayed on the input screen as an input character candidate that begins with characters that match the input character string.
This makes it possible for the user to display the desired character string by performing the single operation of selecting the displayed input character candidate "ABCDFHI", instead of performing three operations of the character buttons to input "FHI".

With this sort of known input support for character input, all of the keywords that begin with characters that match the input character string are displayed.
Accordingly, in a case where the number n of operations to select the desired input character candidate is not less than a number N of operations that are necessary in order to input a number of the character strings driven by subtracting a number of the input character string from a number of the characters in the desired character candidate (n is greater than or equal to N), the support for the input operation is not provided.
For example, in a case where the user has operated the character buttons to input "ABCDFH", the number of operations is the same, one operation of a character button to input "I" and one operation to select the keyword "ABCDFHI". Therefore, the support for the input operation is not provided, even though a keyword that requires at least the same number of operations as are necessary for input by the character buttons is eligible for display as an input character candidate.
Conversely, displaying a keyword that will not decrease the number of input operations creates a problem in that it prevents a different keyword from being displayed.

The present invention provides a technology that performs effective input support.

(1) A search device according to a first aspect of the present invention that includes an input portion, a storage portion, a search portion, a first display portion, and a second display portion. The input portion accepts an input of a first character string for searching for a search object. The storage portion stores second character strings for searching for the search object. The search portion searches among the second character strings in the storage portion for at least one second character string that begins with a character string that matches the first character string that is input through the input portion. The first display portion displays a second character string of the at least one of the second character strings found in the storage portion, excluding from the display any of the at least one found second character string for which a number of subsequent input operations that equals the difference between the number of characters in the found second character string and the number of characters in the first character string that is input through the input portion is less than or equal to a number of operations to select the found second character string in a case where the found second character is displayed by the first display portion. The second display portion that, when one of the at least one second character string that is displayed by the first display portion is selected, displays a search object that corresponds to the selected second character string.
(2) According to a second aspect of the present invention, a computer-readable storage medium that stores computer-executable instructions accepts, through an input portion, an input of a first character string for searching for a search object, stores, in a storage portion, second character strings for searching for the search object, searches among the second character strings in the storage portion for at least one second character string that begins with a character string that matches the first character string that is input through the input portion, displays on the display portion, the at least one of the second character strings found in the storage portion, excluding from the display any of the at least one found second character string for which a number of subsequent input operations that equals the difference between the number of characters in the found second character string and the number of characters in the first character string that is input through the input portion is less than or equal to a number of operations to select the found second character string in a case where the found second character is displayed by the display portion, and displays on the display portion, when one of the at least one second character string that is displayed by the display portion is selected, a search object that corresponds to the selected second character string.

According to the present invention, a second character string of the at least one of the found second character strings is displayed, excluding from the display any of the at least one found second character string for which a number of subsequent input operations that equals the difference between the number of characters in the found second character string and the number of characters in the first character string that is input through the input portion is less than or equal to a number of operations to select the found second character string in a case where the found second character is displayed by the first display portion. Therefore, input support is provided effectively.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a system configuration diagram of a navigation device;
FIG. 2 is an explanatory figure that conceptually shows contents of destination data that are stored in a destination data file;
FIG. 3 is an explanatory figure that conceptually shows contents of keywords that are stored in a keyword data file;
FIG. 4A is a figure that shows an example of a form of a search character input screen that is used in search processing;
FIG. 4B is a figure that shows another example of a form of the search character input screen that is used in the search processing;
FIG. 5 is a figure for explaining a search results screen;
FIG. 6A is a figure that shows an example of a form of the search character input screen in a modified example of an embodiment; and
FIG. 6B is a figure that shows another example of a form of the search character input screen in the modified example of the embodiment.

### DETAILED DESCRIPTION OF THE EMBODIMENTS

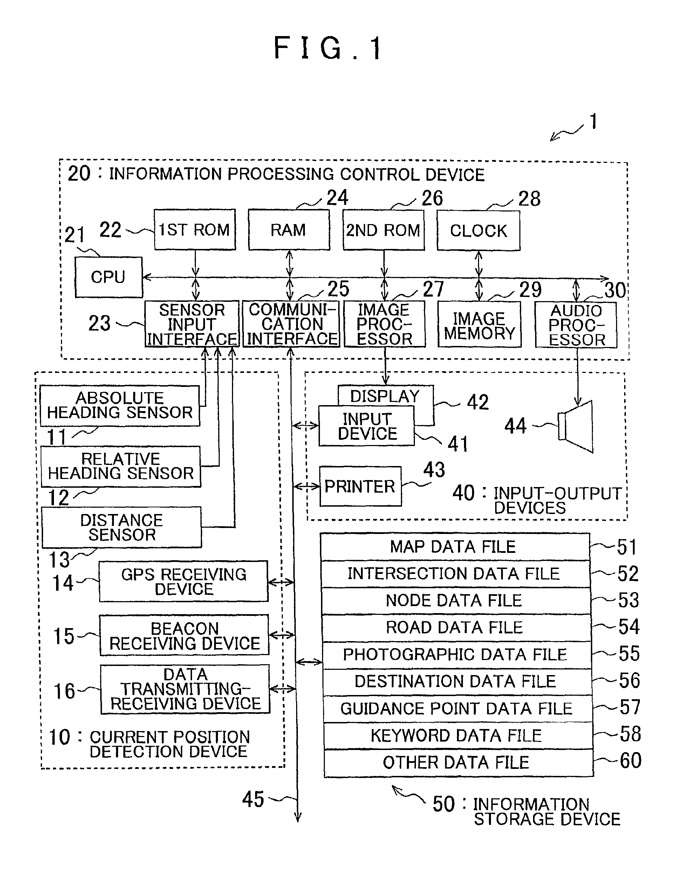

Hereinafter, an embodiment of the present invention will be explained in detail with reference to FIGS. 1 to 6B, using as an example a case in which a search device is used in a navigation device.

### (1) Overview of the embodiment

When a user inputs, from character buttons, a character string for searching, a navigation device 1 searches for keywords that include the input character string. For each of the keywords it finds, the navigation device 1 subtracts a number M of the characters in the character string that has been input from a number K of the characters in the keyword to derive a number N (K minus M). In a case where the character strings in the keyword are input from the character buttons, the number N is the number of subsequent operations that are required after the number M of the characters have been input.

At the same time, in a case where the keyword is displayed as an input character candidate such that the user can select it, the navigation device 1 determines a number n of the operations that are necessary in order to select the displayed input character candidate. In the present embodiment, the input character candidate is displayed as a selectable button on a touch panel, so the number n of the operations to select it equals one. However, in a case where the user makes the selection by operating a cursor movement key and a select key, the number n of the operations is calculated based on the display position of the input character candidate.

Next, the navigation device 1 displays the keywords that have been found that correspond to the input character string as input character candidates according to a specified order of priority, excluding those keywords for which the number N of operations is not less than n.
This makes it possible for the operations to select a keyword that is displayed as an input character candidate to be operations that will definitely decrease the number of input operations.
Furthermore, excluding keywords as input character candidates makes it possible to increase the possibility that keywords will be displayed that would otherwise not be displayed due to a restriction on the number of displayed input character candidates.

### (2) Details of the embodiment

FIG. 1 is a system configuration diagram of the navigation device 1, in which the present embodiment is implemented.
The navigation device 1 is installed in a vehicle and, as shown in FIG. 1, includes a current position detection device 10, an information processing control device 20, input-output devices 40, and an information storage device 50.
A configuration of the current position detection device 10 will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 may be a sensor that detects, for example, whether or not the vehicle has turned at an intersection. It may also be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used as the relative heading sensor 12. In other words, the relative heading sensor 12 may be any unit that can detect an angle that changes in relation to a reference angle (the absolute heading).
A distance sensor 13 may, for example, detect and measure the rotation of a wheel or detect the acceleration and derive its second integral. In other words, the distance sensor 13 may be any unit that can measure a distance that the vehicle moves.

A Global Positioning System (GPS) receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as Vehicle Information and Communication System (VICS) information, that is, information on traffic congestion, information on the vehicle's current position, parking information, and the like.

A data transmitting-receiving device 16 utilizes a telephone circuit or radio waves to perform communication and exchange information with other devices outside the vehicle.
For example, the data transmitting-receiving device 16 may be used in a variety of ways, such as a car telephone, and for ATIS, VICS, GPS correction, inter-vehicle communication, and the like, and it is capable of inputting and outputting information that relates to the operation of the vehicle.

The vehicle is also provided with a vehicle speed sensor that measures the vehicle's speed, an acceleration sensor that measures acceleration, an accelerator sensor that measures the extent to which the accelerator pedal is depressed, a brake sensor that measures the extent to which the brake pedal is depressed, and the like, although these are not shown in the drawings.

The information processing control device 20 performs calculations and control based on information that is input from the current position detection device 10 and the input-output devices 40, as well as on information that is stored in the information storage device 50. The information processing control device 20 also performs control such that calculation results are output to an output portion such as a display 42, a printer 43, a speaker 44, or the like.

The configuration of the information processing control device 20 is described below.
A central processing unit (CPU) 21 performs overall calculations and control for the entire navigation device 1.
In the present embodiment, the CPU 21 performs input support processing that reduces the number of input operations, based on the keyword data.

A first ROM 22 stores programs that are related to navigation, specifically programs that are related to current position detection, route searching, displayed guidance, and the like.
The CPU 21 operate in accordance with the programs that are related to navigation to perform various types of processing, such as route guidance processing, route search processing, destination setting processing, input support processing, and the like.

An input interface 23 is a unit that receives information from the current position detection device 10.
A RAM 24 provides working memory for the information processing that the CPU 21 performs, storing data that the CPU 21 uses to display various types of screens, output values for the various types of sensors, information that the user has input, and the like, for example.
More specifically, the RAM 24 stores information that the user inputs, such as information on the destination that is input from an input device 41 that is described later, information on a point that the vehicle passes, and the like. The RAM 24 also stores the results of calculations that the CPU 21 makes based on the information that is input by the user, route search results, and map information that is read in from the information storage device 50.
A communication interface 25 inputs and outputs information from the current position detection device 10, particularly information that is acquired from outside the vehicle.

A second ROM 26 stores a navigation program that is related to voice guidance in particular. Note that the first ROM 22 and the second ROM 26 may also be configured from a single common ROM.
An image processor 27 takes vector information that is processed by the CPU 21 and processes it into image information.

A clock 28 keeps time.
An image memory 29 stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be configured from a touch panel, a touch switch, a joystick, a key switch, or the like, for example.
A map of the area around the current position and a route to the destination are displayed on the display 42.

The information storage device 50 is connected to the information processing control device 20 through a transmission path 45.
The information storage device 50 stores a map data file 51, an intersection data file 52, a node data file 53, a road data file 54, a photographic data file 55, the destination data file 56, a guidance point data file 57, a keyword data file 58, and an other data file 60.

The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.
Note that for information that must be overwritten, the information storage device 50 may be configured from a hard disk, flash memory, or the like, and for other, fixed information, a ROM such as a CD-ROM, a DVD-ROM, or the like may be used for the information storage device 50.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like.
The guidance point data file 57 stores guidance data on geographical points where guidance is required, such as the content of a guidance display sign that is installed on a road, guidance for a branching point, and the like.

The destination data file 56 stores data related to the places, facilities, and the like that can be set as destinations, such as major tourist areas and buildings, companies, sales offices, and the like that are listed in telephone directories, and the like.

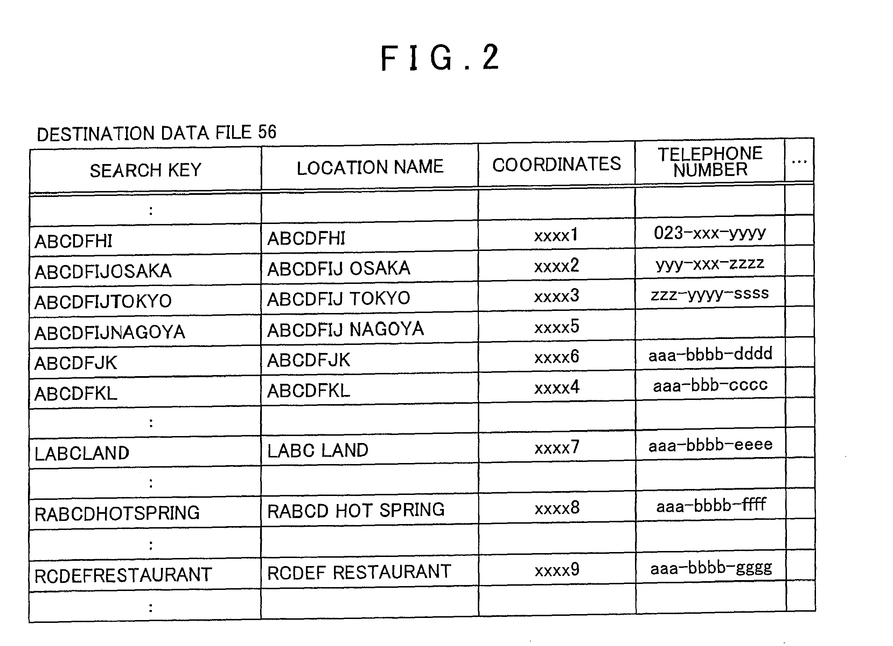

FIG. 2 conceptually shows contents of the destination data that are contained in the destination data file 56.
For each destination, the search key, a location name, coordinates, a telephone number, and other data are stored in the destination data file 56.
The search key is a (alphabetic) spelling of the location name and is the key that is compared to the character string that is input in order to search for the destination.
The location name is the declared name of the destination.
The coordinates, the telephone number, and the other data are location information that provides details about the destination.
The coordinates are the latitude and the longitude of the geographical point where the destination is located. Note that information other than the latitude and the longitude may also be used, provided that the geographical point can be specified.
The telephone number is the telephone number of the destination facility.
The other data may include the address of the destination, the business hours and parking information if the destination is a shop or the like, area information such as "Minnesota", genre information such as "restaurant", and the like.

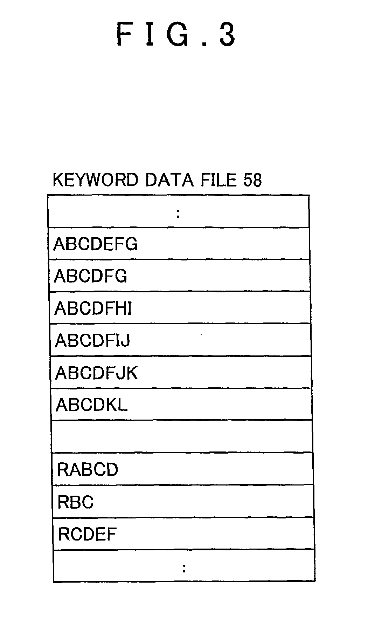

FIG. 3 conceptually shows contents of keywords that are stored in the keyword data file 58.
The keywords that will be displayed as the input character candidates on keyword buttons (which are described later) are stored in the keyword data file 58.
The keywords, such as the "ABCDEFG", "ABCDFHI", "RABCD", "RBC", "RCDEF", and the like that are shown in FIG. 3, are set in advance by extracting a plurality of words that have spellings in common with a plurality of location names.

In the navigation device 1 that is configured in this manner, route guidance is performed as described below.
The navigation device 1 detects the current position using the current position detection device 10, then reads map information for the area surrounding the current position from the map data file 51 in the information storage device 50 and displays the map information on the display 42.
The navigation device 1 then displays a search character input screen 100, a search results screen 200, or the like on the display 42 and accepts input of a destination from the input device 41.
The input device 41 is provided with a touch panel that is disposed on the display 42, and when the user touches an operation button that is displayed on the display 42, the navigation device 1 detects the selecting of the operation button and accepts the setting of the destination by the user.

Then, when the destination has been input from the input device 41, the information processing control device 20 searches for (computes) a plurality of candidates for a route from the current position to the destination and displays the candidates on the map that is displayed on the display 42. When the driver selects one of the routes, the information processing control device 20 (a route acquisition portion) acquires the route by storing the selected route in the RAM 24.

Note that the information processing control device 20 may also acquire the route by transmitting the current position of the vehicle (or a departure point that is input) and the destination to an information processing center and receiving a route to the destination that has been found by the information processing center. In this case, the communication of the destination and the route is accomplished by wireless communication through the communication interface 25.
The user may also search for the route from the departure point to the destination by using an information processing device such as a personal computer or the like at home or elsewhere, then store the chosen route in a storage medium such as a USB memory or the like. The navigation device 1 may then acquire the route through a device that reads it from the storage medium. In this case, the device that reads the route from the storage medium is connected to the information processing control device 20 through the transmission path 45.

When the vehicle is in motion, the route guidance is performed by tracking the current position that is detected by the current position detection device 10.
The navigation device 1 specifies the vehicle's current position on the map by using map matching between the road data that corresponds to the chosen route and the current position that is detected by the current position detection device 10, then displays the chosen route and the current position on the map of the area surrounding the current position of the vehicle, which is displayed on the display 42.
Based on the relationship between the chosen route and the current position, the information processing control device 20 determines whether or not guidance is necessary. Specifically, in a case where the vehicle will continue to drive straight ahead for at least a specified distance, the information processing control device 20 determines whether or not route guidance and direction guidance are necessary for a specified road change point or the like. If guidance is necessary, the guidance is displayed on the display 42 and also provided by voice.

Next, the search processing according to the present embodiment, as well as the input support processing in the search processing, will be explained.

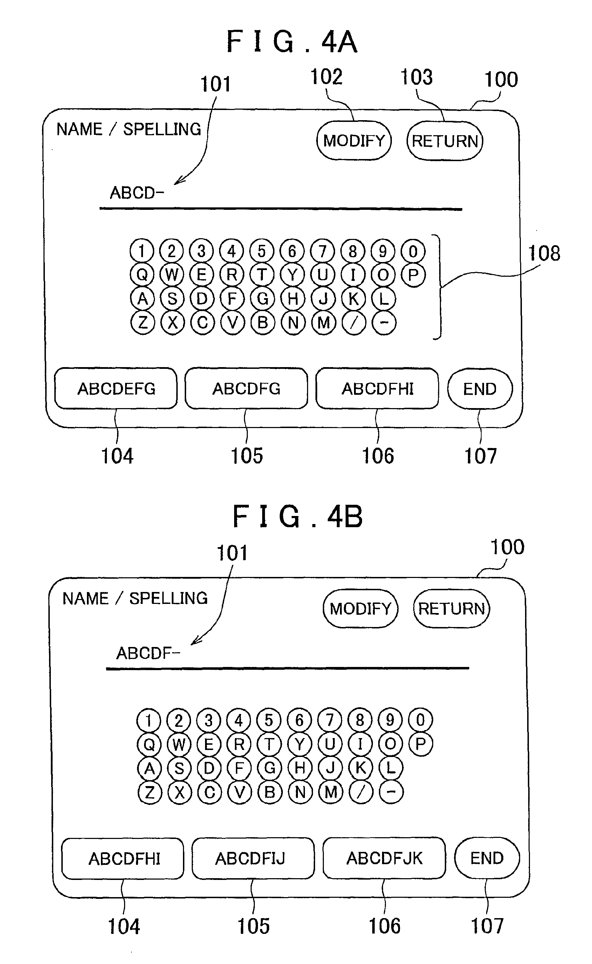

FIG. 4A is a figure that shows an example of a form of the search character input screen 100 that is displayed on the display 42.
The touch panel that serves as the input device 41 (FIG. 1) is provided on the face of the display 42, and when the user makes a selection by touching a button or the like that is displayed on the display 42, information that corresponds to the touched button can be input to the navigation device 1.

The search character input screen 100 is configured from a search character setting space 101, a Modify button 102, a Return button 103, character buttons 108, keyword buttons 104 to 106, and an End button 107.
The search character setting space 101 is a space that displays the character string that the user has input, and to prompt further input, it also displays an underscore character after the (alphabetic) characters that have already been input.

The Modify button 102 is a button that modifies the input in the search character setting space 101, and if the search character setting space 101 is selected, for example, the navigation device 1 deletes the character string that is displayed in the search character setting space 101.
The Return button 103 is a button that returns the display to the screen that was displayed before the shift to the search character input screen 100.
The character buttons 108 are buttons for inputting alphabetic characters and symbols, and the navigation device 1 displays the characters that the user has selected in the search character setting space 101.

The End button 107 is a button for setting the input character string that has been input in the search character setting space 101. When the End button 107 is selected, the destination data file 56 is searched by the character string displayed in the search character setting space 101.
Note that the destination data file 56 may be searched every time a character is input in the search character setting space 101, even before the End button 107 is selected, such that the eligible location information in the destination data file 56 is narrowed down in parallel with the inputs.

Of the keywords that begin with characters that match the input character string that is displayed in the search character setting space 101, the keyword buttons 104 to 106 selectably display, as the input character candidates, those keywords that, if selected, will reduce the number of the input operations.
In the present embodiment, when the characters are input sequentially in the search character setting space 101, a search is performed for the keywords that begin with characters that match the character string that has been input.
Next, for each of the keywords that are found, the number N (K minus M) of the subsequent input operations, that is, the number that is calculated by subtracting the number M of the characters input in the search character setting space 101 from the number K of the characters in the keyword, is determined. If the number N is greater than the number n of selection operations that would be required if the keyword were displayed as an input character candidate (N is greater than n), the keyword is extracted as one of the input character candidates.

However, in the present embodiment, the number n of selection operations is fixed at one, so given that M is the number of input characters, the keywords for which the number of characters is at least two greater than M are extracted as the input character candidates from among the keywords that are found.
The extracted keywords (the input character candidates) are then displayed in the keyword buttons 104 to 106 according to a specified order of priority.
Note that in the present embodiment, the number of characters that can be displayed in the keyword buttons 104 to 106 is fixed at seven characters, so for the keywords that have more than seven characters, the keyword buttons 104 to 106 are configured such that the eighth and subsequent characters are not displayed. However, it is also acceptable to reduce the size of the displayed characters for those keywords that have eight characters or more, such that all of the characters in the keywords can be displayed.

For example, if the user inputs the four characters "ABCD" (M equals four) in the search character setting space 101, as shown in FIG. 4A, the navigation device 1 searches for the keywords whose first four characters are "ABCD".
Specifically, "ABCDEFG", "ABCDFG", "ABCDFHI", "ABCDFIJ", "ABCDFJK", and the like are found as the matching keywords in the keyword data file 58 (FIG. 3).
In this case, the number of characters in all of the found keywords are at least two greater than the number of input characters M (at least four plus two), so all of the keywords serve as the input character candidates.

However, as shown in FIGS. 4A and 4B, the number of the keyword buttons in the present embodiment is three, so according to the specified order of priority, the three highest-order keywords, "ABCDEFG", "ABCDFG", and "ABCDFHI", are selectably displayed as the input character candidates in the keyword buttons 104 to 106, respectively.
Note that the number of the keyword buttons in the present embodiment is three, but the number may also be freely set to any number P in accordance with the size of the display screen, the sizes of the keyword buttons, the number of characters that can be displayed in each of the keyword buttons, the character size, and the like, such that six keyword buttons may be provided in two rows, four keyword buttons in one row, four keyword buttons in each of two rows, and the like.

In the present embodiment, alphabetical order is used as the order of priority for displaying the keywords as the input character candidates, but another order of priority may also be used.
For example, previously selected keywords may be learned, and priority may be given to displaying the learned keywords. The numbers of times that the keywords are selected may be counted, and the learning of the keywords may be in descending order by the number of selections. Alternatively, the dates and times that the keywords are selected may be stored, and the learning of the keywords may be in reverse chronological order.

In a case where the desired character string is present among the keyword buttons 104 to 106, and the user selects the corresponding keyword button, the character string that is displayed for the selected input character candidate is displayed in the search character setting space 101.
This makes it possible for the user to reduce the number of the character input operations. For example, in a case where "ABCDEFG" in the keyword button 104 is selected, the selection process is completed in a total of five operations, that is, the four input operations of the character buttons 108 "A", "B", "C", and "D", plus the one selection operation of the keyword button 104.
In contrast, if all of the characters are input from the character buttons 108, seven operations are required in order to input the seven characters, so input support is provided to the user by reducing the number of operations by two.

In a case where the desired character string is not present among the keyword buttons 104 to 106, the user inputs the next character from one of the character buttons 108.
For example, if "F" is input after "ABCD" (the number M of the input characters is five), as shown in FIG. 4B, the input character string "ABCDF" is displayed in the search character setting space 101.
In this case, in accordance with the input character string "ABCDF", the keywords for which the first five characters are "ABCDF" are found in the keyword data file 58.

Note that the searching of the keyword data file 58 for the keywords that begin with characters that match the input character string that is displayed in the search character setting space 101 is not performed every time one character is input. At a point when a specified number q of characters (for example, one character, two characters) have been input, the keywords that have been found in the keyword data file 58 are stored in the RAM 24, and in a case where the next character is input, the keywords are extracted from among the keywords that are stored in the RAM 24.

"ABCDFG", "ABCDFHI", "ABCDFIJ", "ABCDFJK", and the like are found (extracted) as the keywords that begin with characters that match the input character string "ABCDF" in the keyword data file 58.
Given that the number M of the input characters is five, then among the found keywords, "ABCDFG" is the keyword for which the number K of characters is not greater than six, that is, M plus one.

For the keyword "ABCDFG", even if it displayed as one of the input character candidates in the one of the keyword buttons, the number n of operations of the keyword buttons (that is, one) is the same as the number N of operations to input "G" from the character buttons 108, so the input support is not provided.
Accordingly, the keyword "ABCDFG", for which the number of characters is M plus one, is not displayed in the keyword button as one of the input character candidates.

This means that of the keywords for which the number K of characters is M plus two, the three keywords "ABCDFHI", "ABCDFIJ", and "ABCDFJK" are displayed in the keyword buttons 104 to 106 according to the specified order of priority, as shown in FIG. 4B.
Thus, excluding "ABCDFG", for which the input support is not provided, enables it possible to make another of the keywords for which the input support will be provided, "ABCDFJK", display.

As explained above, according to the present embodiment, a keyword for which the number N of the subsequent input operations of the character buttons 108 (the number K of the keyword characters minus the number M of the input characters) is not greater than the number n of selection operations of the keyword buttons 104 to 106, that is, a keyword for which the number K of the characters is one of equal to and one greater than M, is excluded from input character candidate s . Therefore, in a case where one of the keyword buttons 104 to 106 is selected, it is possible to provide the input support (to reduce the number of operations) reliably.
Furthermore, because the keywords for which the input support will not be provided are not displayed in the keyword button 104 to 106, it is possible to display a larger number of other keywords for which the input support will be provided.

Note that in a case where one of the character buttons 108 is selected on the search character input screen 100 on which the keywords are displayed in the keyword buttons 104 to 106, it can be inferred that none of the displayed keywords is the desired character string. Accordingly, in a case where one of the character buttons 108 is newly selected, the keywords that were displayed prior to the character button's being newly selected may be excluded from the input character candidates.

For example, on the search character input screen 100 that is shown in FIG. 4A, the three keywords "ABCDEFG", "ABCDFG", and "ABCDFHI" are displayed in the keyword buttons 104 to 106 to provide input support in relation to the input character string "ABCD".
In a case where the user then selects the character button "F" on the search character input screen 100, it is determined that none of the three keywords that are displayed in the keyword buttons 104 to 106 is the character string that the user needs, so it would be meaningless to display any of the same keywords on the next screen.

Accordingly, the keyword "ABCDFHI" that was displayed on the search character input screen 100 as shown in FIG. 4B is excluded from the input character candidates, and three new keywords, "ABCDFIJ", "ABCDFJK", and "ABCDFKL", are displayed as the input character candidates in the keyword buttons 104 to 106.
Thus, if the user selects one of the character buttons 108, the keywords for which the input support will be provided will be definitely displayed, and because three new keywords can be displayed, a larger number of keywords can be presented to the user.

When the user presses the End button 107 on the search character input screen 100, the character string that is displayed in the search character setting space 101 is established as the key for searching, the destinations that correspond to the established key for searching are found in the destination data file 56, and the destination candidates are displayed in list form on the search results screen 200.
When the user presses the End button 107 after selecting any one of the keyword buttons 104 to 106, the input character string candidate that corresponds to the selected input character string candidate button is displayed on the search character setting space 101, the destination that corresponds to the input character string candidate is found and is displayed in list form on the search results screen 200.

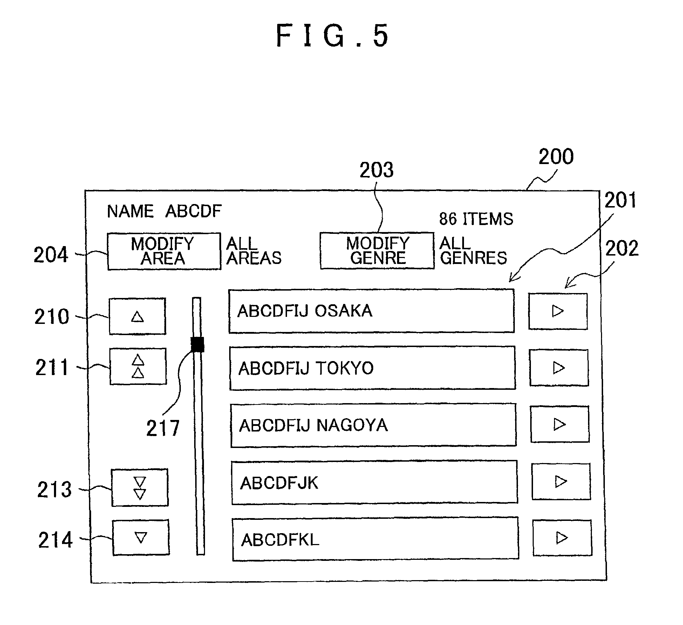

FIG. 5 is a figure that shows an example of the search results screen 200, showing the results that are found by searching when "ABCDF" has been input on the search character input screen 100.
Search results display spaces 201 are spaces for displaying the location names that are found, as a list in the form of location name buttons.
In the example in FIG. 5, five candidates can be displayed at one time, and the location name buttons are displayed for the top five candidates that have been found, "ABCDFIJ OSAKA", "ABCDFIJ TOKYO", "ABCDFIJ NAGOYA", "ABCDFJK", and "ABCDFKL".

If the user selects "ABCDFIJ TOKYO", for example, as the desired destination on the search results screen 200, the navigation device 1 reads the information in the destination data file 56 that pertains to "ABCDFIJ TOKYO", such as the coordinates and the like, and sets "ABCDFIJ TOKYO" as the destination.
The navigation device 1 also displays information on the screen about the set destination (business hours, special sale information, and the like), displays the position of the destination on a map, sets the information as a destination, searches for a route to the set destination, and provides route guidance.

One embodiment of the present invention has been explained above, but the present invention is not limited to the explained embodiment, and various modifications can be made within the scope of the claims.
For example, in the explained embodiment, the input support would not be provided for a keyword for which the number N of the subsequent input operations of the character buttons 108 is not greater than the number n of operations of the keyword buttons, even if the keyword were to be displayed, so the keyword is excluded from the input character candidates and is not displayed.
In a modified example, instead of not displaying as an input character candidate a keyword for which the number K of characters equals M plus one, the navigation device 1 displays the keyword and highlights the one of the character buttons 108 that corresponds to the last character of the keyword, making the highlighted button more conspicuous than the other character buttons 108.

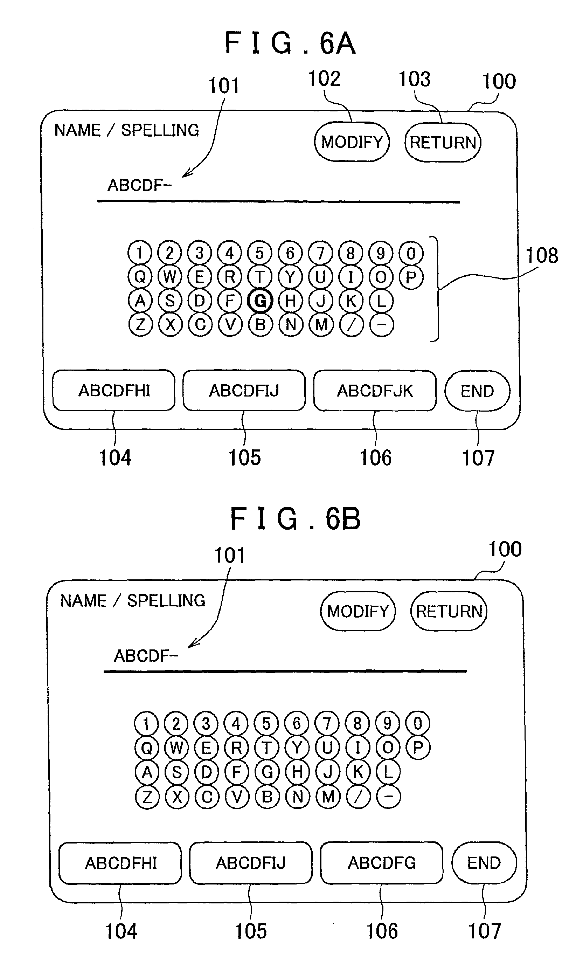

FIG. 6A shows a state in which the last character of a keyword that is excluded from the input character candidates is highlighted.
In the example in FIG. 6A, the keyword "ABCDFG" has been extracted based on the input character string "ABCDF" that is displayed in the search character setting space 101, but it has been excluded from the input character candidates. The character button 108 for the character "G", which is the last character of the keyword "ABCDFG", is displayed as a bold character, such that the display of the character "G" is emphasized. The character button 108 may also be highlighted by causing it to flash, by displaying it in a different color from the other characters, and the like, instead of displaying a bold character.

Note that in a case where a plurality of keywords are excluded because the number K of characters equals M plus one, the character buttons 108 for the last characters of all of the excluded keywords are displayed in a highlighted form, but it is also acceptable to display in a highlighted form only a fixed number (for example, one, two, or any number u) of keywords that are ranked the highest according to a specified order of priority.

In addition, a keyword for which the input support is not provided because the number K of characters equals M plus one may be displayed in a case where the number of the keywords for which the input support is provided because the number K of characters is at least M plus two is less than a number t of the input character candidates that can be displayed (in the embodiment that is explained above, t is three, the number of the keyword buttons).
FIG. 6B shows a case in which only the three keywords "ABCDFG", "ABCDFHI", and "ABCDFIJ" have been extracted based on the input character "ABCDF".
In the embodiment that is explained above, the number K of characters in the keyword "ABCDFG", which is six, equals M plus one, "ABCDFG" is excluded from the input character candidates.
However, in the present modified example, only the two keywords "ABCDFHI" and "ABCDFIJ" have more than six (M plus one) characters, which means that the number t of the input character candidates that can be displayed has not been reached, so "ABCDFG" is displayed as an input character candidate.
Displaying the keyword "ABCDFG" does not reduce the number of input operations, but because "ABCDFG" can be displayed in a single place, it has the effect of making the keyword easier for the user to recognize than the combination of the "ABCDF" in the search character setting space 101 and the character button "G", which are displayed separately.

Note that according to the modified example, in a case where a keyword for which the number K of characters equals M plus one is displayed as an input character candidate, any keywords for which the number K of characters is at least M plus two are displayed in positions that can be selected more quickly.
For example, in the case of the keyword buttons 104 to 106, in which the character strings are displayed horizontally, as shown in FIG. 6B, in most cases the character strings are recognized starting on the left with the keyword button 104, in the same manner that the individual characters are read, so the farther to the left that the keyword is positioned, the more quickly it can be recognized and selected.
Accordingly, the keywords for which the number K of characters is at least M plus two are displayed in the leftmost keyword buttons 104 and 105, and the keyword for which the number K of characters equals M plus one is displayed next (in the keyword button 106).

The modified example that is shown in FIG. 6B is a case in which the horizontally displayed keywords are disposed horizontally, but in a case where horizontally displayed keywords are disposed vertically, and in a case where vertically displayed keywords are disposed vertically, the farther to the top that the keyword is positioned, the more quickly it can be selected.
On the other hand, in a case where vertically displayed keywords are disposed horizontally, the farther to the right that the keyword is positioned, the more quickly it can be selected. However, it is possible that a user exists who will start recognizing the keywords from the left side even in this case, so it may be the case that the farther to the outside (the farther from the center) that the keyword is positioned, the more quickly it can be selected.

In a case where a keyword for which the number K of characters equals M plus one is displayed, the display space may also be made smaller such that a larger number of keywords can be displayed. In this case, the characters of the keyword are also made smaller to fit the size of the display space.

Further, in a case where a keyword for which the number K of characters equals M plus one is displayed, the response to the keywords for which the number K of characters is at least M plus two may be heightened more than the response to the keyword for which the number K of characters equals M plus one.
For example, the response can be heightened by increasing the size of a touch panel response area (an area that indicates a selection when touched by the user) for a keyword for which the number K of characters is at least M plus two.

In the embodiment that is explained above, a case was explained in which the keyword data file 58 for the input support is stored, and the keywords are found (extracted) based on the input character string and are then displayed as the input character candidates.
In contrast to this, instead of the keywords, the search keys in the destination data file 56 (refer to FIG. 2) may be displayed as the input character candidates.
This would render the keyword data file 58 unnecessary.
Note that in the case of this modified example, the search keys include keys that have large numbers of characters, corresponding to the spellings of the location name, so a value y, such as seven characters, for example, is set in advance as the number of characters that can be displayed for an input character candidate.

In the embodiment that is explained above, the navigation device 1 (the search device) was explained on the assumption that English would be used. That is, the navigation device 1 with English specifications was explained, in which the input device 41 that inputs the characters is configured from the alphabetic characters that are the input units for English, and the data that are stored in the destination data file 56, the guidance point data file 57, the keyword data file 58, the other data file 60, and the like pertain to destination searches that are performed in English.
However, the environment in which the navigation device 1 is used is not limited to an English-language environment. The search processing and the input support processing that are described above can also be used in a navigation device that is specified for any language by adapting the specifications for the input device 41 and the data to the language in question.

For example, the navigation device 1 (the search device) may also be provided with keys that represent the fifty sounds of the Japanese syllabary to make it suitable for Japanese input, to cite just one example of a language other than English.
The device may also be made compatible with input in any language, such as German, Spanish, French, Arabic, Chinese, Korean, Russian, and the like. In a case where the navigation device 1 is made compatible with Chinese-language input, for example, the input device 41 may be provided with a keyboard that is compatible with Chinese Pinyin input.

The input language does not necessarily have to be the language of the country (the region) where the navigation device 1 is used. For example, the navigation device 1 that uses German-language input may also be used in France. In that case, the data that are stored in the destination data file 56, the keyword data file 58, and the like and that are searched when the destination search is performed are made compatible with the input language, such that the data (for example, destination names, keyword, addresses, and the like) can be compared to the input characters.
Note that the data that are searched may also be stored such that they are compatible not only with the input language, but also with the language of the country (the region) where the navigation device 1 is used.
The data that are not searched when the destination search is performed, such as appended information data, for example, do not have to be stored in a form that is compatible with the input language. Even in the data that are not searched, it is acceptable to store, for example, data that are compatible with the input language, data that are compatible the language of the country (the region) where the navigation device 1 is used, and data that are compatible with both the input language and the language of the country (the region) where the navigation device 1 is used.

## Claims

1. A search device comprising
an input portion (41) that accepts an input of a first character string for searching for a search object, **characterized in that** it further comprises :
a storage portion (56, 58) that stores second character strings for searching for the search object,
a search portion (1) that searches among the second character strings in the storage portion (56, 58) for at least one second character string that begins with a character string that matches the first character string that is input through the input portion,
a first display portion (42, 104, 105, 106) that displays a second character string of the at least one of the second character strings found in the storage portion (56, 58), excluding from the display any of the at least one found second character string for which a number (N) of subsequent input operations that equals the difference between the number (K) of characters in the found second character string and the number (M) of characters in the first character string that is input through the input portion (41) is less than or equal to a number (n) of operations to select the found second character string in a case where the found second character is displayed by the first display portion, and
a second display portion (42, 201) that, when one of the at least one second character string that is displayed by the first display portion (42, 104, 105, 106) is selected, displays a search object that corresponds to the selected second character string.

2. The search device according to claim 1, **characterized in that** it further comprises
an output portion (42) that, when the search object that is displayed by the second display portion (42, 201) is selected, outputs information that pertains to the selected search object.

3. The search device according to claim 1 or 2, **characterized in that**
the second display portion (42, 201), in a case where none of the at least one second character string that is displayed by the first display portion (42, 104, 105, 106) is selected, displays a search object that corresponds to the first character string that is input through the input portion (41).

4. The search device according to any one of claims 1 to 3, **characterized in that**
the search portion (1), in a case where none of the at least one second character string that is displayed in the first display portion (42, 104, 105, 106) is selected and a character is newly input through the input portion (41) after the first character string is input through the input portion, searches among the second character strings in the storage portion (56, 58) for at least one second character string that begin with a character string that matches the character string including the newly input character through the input portion, and
the first display portion (42, 104, 105, 106) displays a second character string of the at least one of the second character strings that is found in the storage portion (56, 58), exclusive of any of the at least one found second character string that has been excluded from the display and exclusive of all of the at least one second character string that was not selected.

5. The search device according to any one of claims 1 to 4, **characterized in that**
the input portion (41) includes input keys (108) that accept input of characters, and
the input keys are displayed such that an input key that corresponds to a last character of any of the at least one found second character string that has been excluded from the display by the first display portion (42, 104, 105, 106) is differentiated from the other input keys.

6. The search device according to any one of claims 1 to 5, **characterized in that**
the first display portion (42, 104, 105, 106), in a case where the number of the at least one displayed second character string is less than the number that can be displayed, displays the at least one second character string that has been excluded from the display.

7. The search device according to claim 6, **characterized in that**
the first display portion (42, 104, 105, 106), in a case where the at least one second character string that has been excluded from the display is displayed, the display position of the at least one second character string that has been excluded from the display is determined based on whether or not the number (N) of subsequent input operations is greater than the number (n) of operations to select the second character string.

8. The search device according to claim 6 or 7, **characterized in that**
the first display portion (42, 104, 105, 106), in a case where the at least one second character string that has been excluded from the display is displayed, the display position of the at least one second character string that has been excluded from the display is determined based on the display position of the at least one second character string for which the number (N) of subsequent input operations is greater than the number (n) of operations to select the second character string.

9. The search device according to any one of claims 1 to 7, **characterized in that**
the first display portion (42, 104, 105, 106) displays the at least one of the second character strings that is found in the storage portion (56, 58), exclusive of any of the at least one found second character string for which the number (N) of subsequent operations is one.

10. The search device according to any one of claims 1 to 8, **characterized in that**
the second character strings include a keyword that is common to a plurality of search objects.

11. A search method, **characterized in that** it comprises:
accepting, through an input portion (41), an input of a first character string for searching for a search object,
storing, in a storage portion (56, 58), second character strings for searching for the search object,
searching, among the second character strings in the storage portion (56, 58) for at least one second character string that begins with a character string that matches the first character string that is input through the input portion,
displaying, on a display portion (42), the at least one of the second character strings found in the storage portion (56, 58), excluding from the display any of the at least one found second character string for which a number (N) of subsequent input operations that equals the difference between the number (K) of characters in the found second character string and the number (M) of characters in the first character string that is input through the input portion (41) is less than or equal to a number (n) of operations to select the found second character string in a case where the found second character is displayed by the display portion (42), and
displaying, on the display portion (42), when one of the at least one second character string that is displayed by the display portion (42) is selected, a search object that corresponds to the selected second character string.

12. A computer-readable storage medium that stores computer-executable instructions **characterized in that** it comprises:
accepting, through an input portion (41), an input of a first character string for searching for a search object,
storing, in a storage portion (56, 58), second character strings for searching for the search object,
searching among the second character strings in the storage portion (56, 58) for at least one second character string that begins with a character string that matches the first character string that is input through the input portion,
displaying on the display portion (42), the at least one of the second character strings found in the storage portion (56, 58), excluding from the display any of the at least one found second character string for which a number (N) of subsequent input operations that equals the difference between the number (K) of characters in the found second character string and the number (M) of characters in the first character string that is input through the input portion (41) is less than or equal to a number (n) of operations to select the found second character string in a case where the found second character is displayed by the display portion (42), and
displaying on the display portion (42), when one of the at least one second character string that is displayed by the display portion (42) is selected, a search object that corresponds to the selected second character string.
